# EUROPÄISCHE PATENTANMELDUNG

(11) **EP 4 503 155 A1**
(43) Veröffentlichungstag der Anmeldung: **05.02.2025**
(21) Anmeldenummer: 23189380.1
(22) Anmeldetag: 03.08.2023
(51) Int. Cl.: H01M 4/04, G01N 25/72

(54) **VERFAHREN ZUR ERKENNUNG VON FEHLSTELLEN EINER BESCHICHTUNG IM RAHMEN EINER BATTERIEZELLENHERSTELLUNG**

(71) Anmelder: Siemens Aktiengesellschaft, 80333 München (DE)
(72) Erfinder: Schulte, Sascha, 91315 Höchstadt (DE); Albrecht, Andreas, 89081 Ulm (DE); Pohle, Roland, 85570 Herdweg (DE); Witt, Jonas, 90419 Nürnberg (DE); Mack, Christian, 91056 Erlangen-Dechsendorf (DE)
(74) Vertreter: Siemens Patent Attorneys

(57) **Zusammenfassung**

Es wird ein Verfahren zur Erkennung einer oder mehrerer Fehlstellen einer Beschichtung vorgeschlagen, wobei die Beschichtung zur Herstellung einer oder mehrerer Batteriezellen vorgesehen ist. Das Verfahren ist gekennzeichnet dadurch, dass eine ortsaufgelöste Thermographie der Beschichtung bei einem und/oder nach einem zur Trocknung der Beschichtung vorgesehenen Trocknungsverfahren durchgeführt wird, wobei in Abhängigkeit von erfassten räumlichen thermographischen Inhomogenitäten die Erkennung der Fehlstellen erfolgt.

Weiterhin betrifft die Erfindung ein Verfahren zur Herstellung von Batteriezellen sowie eine Vorrichtung zur Erkennung einer oder mehrerer Fehlstellen einer für eine Batteriezellenherstellung vorgesehenen Beschichtung.

## Beschreibung

Die Erfindung betrifft ein Verfahren gemäß dem Oberbegriff des Patentanspruches 1, ein Verfahren gemäß dem Oberbegriff des Patentanspruches 7 sowie eine Vorrichtung gemäß dem Oberbegriff des Patentanspruches 10.

Bei der Produktion von Batteriezellen und vergleichbar aufgebauten Flächenelementen werden die Elektroden zunächst auf langen Bahnen metallischer Folien beschichtet und erst später zu den eigentlichen Batteriezellen verarbeitet. Diese Beschichtung erfolgt typischerweise durch ein Auftragen einer nassen Elektrodenpaste auf die genannte Folie. Hierbei umfasst die Elektrodenpaste in Mischung insbesondere Grafit, Bindemittel und Lösungsmittel.

Bei Auftragen der Elektrodenpaste können mehrere Fehler auftreten, die zu einem Defekt oder einer Leistungsminderung, beispielsweise einer reduzierten Kapazität oder Leitfähigkeit, der betroffenen Batteriezelle führen können.

Es ist bekannt derartige Beschichtungen mittels Röntgensystemen zu prüfen. Mittels Röntgensystemen können jedoch nicht alle möglichen Fehler beziehungsweise Fehlstellen erkannt werden. Insbesondere können Röntgenverfahren Oberflächenfehler nur begrenzt erkennen. Zudem sind Röntgensysteme vergleichsweise kostenintensiv.

Der vorliegenden Erfindung liegt die Aufgabe zugrunde, eine verbesserte Erkennung von Fehlstellen einer für eine Batteriezellenherstellung vorgesehenen Beschichtung zu ermöglichen.

Die Aufgabe wird durch ein Verfahren mit den Merkmalen des unabhängigen Patentanspruches 1, durch ein Verfahren mit den Merkmalen des unabhängigen Patentanspruches 7 sowie durch eine Vorrichtung mit den Merkmalen des unabhängigen Patentanspruches 11 gelöst. In den abhängigen Patentansprüchen sind vorteilhafte Ausgestaltungen und Weiterbildungen der Erfindung angegeben.

Das erfindungsgemäße Verfahren zur Erkennung einer oder mehrerer Fehlstellen einer Beschichtung, wobei die Beschichtung zur Herstellung einer oder mehrerer Batteriezellen vorgesehen ist, ist gekennzeichnet dadurch, dass eine ortsaufgelöste Thermographie der Beschichtung bei einem und/oder nach einem zur Trocknung der Beschichtung vorgesehenen Trocknungsverfahren durchgeführt wird, wobei in Abhängigkeit von erfassten räumlichen thermographischen Inhomogenitäten die Erkennung der Fehlstellen erfolgt.

Eine Thermographie kann ein bildgebendes Verfahren sein, welches die Oberflächentemperatur der Beschichtung räumlich aufgelöst, das heißt ortsaufgelöst, erfasst. Die Thermographie kann zeitlich diskret oder zeitlich kontinuierlich durchgeführt werden, das heißt es werden mehrere Abbilder der Oberflächentemperatur zu verschiedenen Zeitpunkten erfasst beziehungsweise kontinuierlich aktualisiert. Mit anderen Worten kann die Thermographie zeitlich und räumlich aufgelöst sein.

Thermographische Inhomogenitäten sind räumliche Unterschiede der Beschichtung bezüglich ihrer mittels der Thermographie erfassten Oberflächentemperatur.

Fehlstellen sind insbesondere räumliche Bereiche der Beschichtung, beispielsweise Oberflächenbereiche, die einen oder mehrere Fehler, beispielsweise Lufteinschlüsse, Risse und/oder Materialinhomogenitäten, aufweisen.

Die Beschichtung ist zur Herstellung einer oder mehrerer Batteriezellen vorgesehen. Typischerweise wird die Beschichtung durch eine Elektrodenpaste ausgebildet.

Erfindungsgemäß wird die Thermographie bei einer und/oder nach einer Trocknung der Beschichtung durchgeführt. Das ist deshalb von Vorteil, da die lokale Trocknung der Beschichtung von ihrer lokalen Beschaffenheit und somit von dem Vorhandensein von lokalen Fehlstellen abhängig ist. Somit werden gemäß der Erfindung der Schritt der Trocknung der Beschichtung mit der Fehlererkennung mittels Thermographie, die Wärmeunterschiede erfassbar macht, synergetisch kombiniert.

Mit anderen Worten werden die Fehler beziehungsweise die Fehlstellen durch ihre Reaktion (Erwärmung/Abkühlung) beim ohnehin erforderlichen Trocknungsprozess erkannt, das heißt detektiert beziehungsweise identifiziert. Dadurch ist das erfindungsgemäße Verfahren effizient in den Herstellungsprozess von Batteriezellen einbettbar, wodurch Aufwand und Kosten reduziert werden können. Zudem wird die Anzahl von erkennbaren Fehlerarten, insbesondere im Vergleich zu Röntgenverfahren, erhöht.

Weiterhin ermöglicht das erfindungsgemäße Verfahren ein Erkennen von Feststellen in der Beschichtung, welche mit bekannten Verfahren, beispielsweise mittels optischen Kameras, nicht erkannt werden können, beispielswiese von Lufteinschlüssen oder einer schlechten Haftung der Beschichtung auf der Trägerfolie.

Bei der Herstellung von Batteriezellen werden die beschichteten Flächen (Beschichtung) typischerweise unmittelbar nach ihrer Beschichtung getrocknet. Hierzu sind grundsätzlich Trocknungsverfahren mittels Konvektionsöfen sowie Trocknungsverfahren mittels Infrarotstrahlern oder Laserstrahlen bekannt.

Besonders bevorzugt werden für das erfindungsgemäße Verfahren Trocknungsverfahren mittels Infrarotstrahlung und/oder Laserstrahlen verwendet. Diese bringen die Trocknungsenergie zur Trocknung in kürzerer Zeit auf eine begrenzte Fläche in das Beschichtungsmaterial ein. Dadurch erfolgt eine schnellere lokale Trocknung, die primär vom direkten Energieeintrag abhängig ist. Diese sind somit nicht wie bei einem konventionellen mittels Konventionsöfen (Heißlufttrocknung) von einer Wärmeleitung aus benachbarten Bereichen abhängig, die wesentlich langsamer erfolgt.

Bei Verwendung einer strahlenbasierten Trocknung, beispielsweise mittels Infrarotstrahler und/oder Laserstrahlen, behält die Beschichtung eine vergleichsweise niedrige Temperatur so lange wie Flüssigkeiten aus dem Material der Beschichtung verdampfen. Hierbei nimmt die Beschichtung die durch die Strahlung eingebrachte Wärme auf. Nach dem Verdampfen der Flüssigkeiten, was lokal unterschiedlich sein kann, wird die eingebrachte Wärme nicht mehr von der Flüssigkeit aufgenommen. Somit heizt sich dort, wo die Flüssigkeit im Wesentlichen verdampft ist, die Beschichtung sehr schnell auf. Dieser Umschlagpunkt zu einem zeitlich schnelleren Aufheizen (Erwärmen) kann mittels der erfindungsgemäß vorgesehenen Thermographie erfasst beziehungsweise erkannt werden. Fehler beziehungsweise Fehlstellen erwärmen sich in diesem Sinne je nach Art des Fehlers früher oder später, sodass diese dadurch mittels der Thermographie erkannt werden können.

Mit anderen Worten ermöglicht das erfindungsgemäße Verfahren durch die Thermographie in Verbindung mit der Trocknung des Materials ein ortsaufgelöstes Erkennen der Fehlstellen aufgrund ihrer im Vergleich zum restlichen fehlerfreien Material zeitlich früheren oder späteren eintretenden Erwärmung, beispielsweise bei der Trocknung, oder früheren oder späteren Abkühlung, beispielsweise nach der Trocknung. Mit anderen Worten weisen Fehlstellen beziehungsweise Bereiche der Beschichtung, die wenigstens einen Fehler aufweisen, eine veränderte Trocknungsdauer auf, die mittels der Thermographie erfasst und erkannt werden kann.

Das erfindungsgemäße Verfahren zur Herstellung einer oder mehrerer Batteriezellen, wobei wenigstens eine Beschichtung zur Herstellung der Batteriezellen verwendet wird, ist gekennzeichnet dadurch, dass eine ortsaufgelöste Thermographie der Beschichtung bei einem und/oder nach einem zur Trocknung der Beschichtung vorgesehenen Trocknungsverfahrens durchgeführt wird, wobei in Abhängigkeit von erfassten räumlichen thermographischen Inhomogenitäten die Erkennung der Fehlstellen erfolgt.

Es ergeben sich zum erfindungsgemäßen Verfahren zur Erkennung von Fehlstellen gleichartige, gleichwertige und gleichwirkende Vorteile und/oder Ausgestaltungen.

Die erfindungsgemäße Vorrichtung zur Erkennung einer oder mehrerer Fehlstellen einer Beschichtung, die zur Herstellung einer oder mehrerer Batteriezellen vorgesehen ist, umfasst einen Trocknungsbereich zur Trocknung der Beschichtung. Die erfindungsgemäße Vorrichtung ist dadurch gekennzeichnet, dass innerhalb des Trocknungsbereichs eine Wärmebildkamera angeordnet ist, wobei die Wärmebildkamera dazu ausgebildet ist, eine ortsaufgelöste Thermographie der Beschichtung durchzuführen, wobei in Abhängigkeit von erfassten räumlichen thermographischen Inhomogenitäten die Erkennung der Fehlstellen erfolgt.

Es ergeben sich zum erfindungsgemäßen Verfahren zur Erkennung von Fehlstellen gleichartige, gleichwertige und gleichwirkende Vorteile und/oder Ausgestaltungen.

Gemäß einer vorteilhaften Ausgestaltung der Erfindung werden die Fehlstellen durch einen zeitlichen Verlauf ihrer Erwärmung mittels der ortsaufgelösten Thermographie erkannt.

Mit anderen Worten weisen Fehlstellen, wie bereits obenstehend beschrieben, eine im Vergleich zum restlichen Material verschiedene Trocknungsdauer auf. Mittels der Thermographie bei oder nach der Trocknung kann diese vorteilhafterweise erfasst werden. Dadurch können die Fehlstellen erkannt werden.

In einer vorteilhaften Weiterbildung der Erfindung weist hierbei der zeitliche Verlauf einen charakteristischen Umschlagpunkt, ab welchem eine schnellere Erwärmung erfolgt, auf, wobei mittels eines früheren oder späteren Auftreten des Umschlagspunktes die Erkennung der Fehlstellen erfolgt.

Fehlstellen sind somit aufgrund ihrer veränderten Trocknungsdauer durch einen zeitlich früheren oder späteren Umschlagpunkt gekennzeichnet. Wird für die Thermographie eine Infrarotkamera verwendet, so ist der Ort/Zeitpunkt (Umschlagpunkt) der nahezu vollständigen Trocknung und eines darauf einsetzenden Temperaturanstieges mittels der zeitlichen Änderungen im Infrarotbild erkennbar.

Liegt beispielsweise an einem Ort der Beschichtung eine Luftblase innerhalb der Beschichtung, das heißt unter ihrer Oberfläche, so ist an der genannten Position beziehungsweise Stelle weniger Feuchtigkeit und weniger Material mit der Fähigkeit zur Wärmeaufnahme vorhanden. Bei homogener Wärmeeinstrahlung (Trocknung) würde dieser Bereich daher deutlich schneller vollständig getrocknet sein und in einem Infrarotbild messbar früher umschlagen (stark erwärmen) als die umliegenden, fehlerfreien Bereiche der Beschichtung. Analog würde bei einer lokalen Klumpenbildung, bei dem punktartig wesentlich mehr Material aufgebracht wurde, die Verdunstung länger dauern und der Umschlagpunkt daher später im Infrarotbild zu erkennen sein. Mittels des Umschlagpunktes können somit die Fehlstellen erkannt werden.

Gemäß einer vorteilhaften Ausgestaltung der Erfindung erfolgt die Thermographie lediglich bei der Trocknung oder unmittelbar nach der Trocknung der Beschichtung.

Dadurch wird vorteilhafterweise die Erkennung von Fehlstellen verbessert.

In einer vorteilhaften Weiterbildung der Erfindung werden/wird als Trocknungsverfahren eine Infrarottrocknung und/oder eine Lasertrocknung verwendet.

Die genannten strahlenbasierten Trocknungsverfahren sind deshalb von Vorteil, da diese synergetisch mit der Fehlererkennung mittels Thermographie zusammenwirken. Das ist deshalb der Fall, da die Erwärmung/Trocknung des Materials beziehungsweise der Beschichtung hierbei im Wesentlichen von dem lokalen Wärmeeintrag und nicht von der Wärmeleitung innerhalb der Beschichtung abhängig ist. Mit anderen Worten ist hierbei das Material für einen längeren Zeitbereich nicht im thermischen Gleichgewicht. Dieser Zeitbereich wird vorteilhafterweise für das Erkennen der Fehlstellen mittels der Thermographie genutzt.

Gemäß einer vorteilhaften Ausgestaltung der Erfindung erfolgt eine Kategorisierung der Fehlstellen in Abhängigkeit ihres thermographischen Abbildes.

Mit anderen Worten ermöglicht die ortsaufgelöste Analyse der thermographischen Aufnahme, insbesondere einer im Trocknungsbereich angeordneten Infrarotkamera beziehungsweise Wärmebildkamera, ebenfalls ein Erkennen der Art des jeweiligen Fehlers, beispielsweise ob dieser oberflächlich ist, in der Beschichtung verborgen oder von Mischfehlern.

In einer vorteilhaften Weiterbildung der Erfindung schließt ein dem Trocknungsverfahren nachgelagertes Schneideverfahren zur Stückelung der Beschichtung eine oder mehrere erkannte Fehlstellen aus.

Mit anderen Worten ist das Schneideverfahren beziehungsweise ein Aussonderungsschritt für fehlerhafte Bereiche vorteilhafterweise dem Trocknungsverfahren und der Thermographie zeitlich nachgelagert. Dadurch können als fehlerhaft erkannte Bereiche (Fehlstellen) vorteilhafterweise aussortiert werden. Somit werden diese fehlerbehafteten Bereiche nicht für die Herstellung von Batteriezellen verwendet, sodass dadurch die Batteriezellenherstellung insgesamt verbessert wird.

Gemäß einer vorteilhaften Weiterbildung der Erfindung wird die Beschichtung durch ein Aufbringen einer Elektrodenpaste auf einer metallischen Trägerfolie ausgebildet.

Dadurch wird vorteilhafterweise ebenfalls eine verbesserte Thermographie der Beschichtung ermöglicht.

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert ein Flussdiagramm eines Verfahrens gemäß einer Ausgestaltung der Erfindung.

Gleichartige, gleichwertige oder gleichwirkende Elemente können in der Figur mit denselben Bezugszeichen versehen sein.

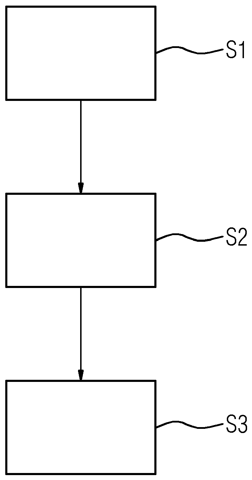

Die Figur 1 zeigt ein Flussdiagramm eines Verfahrens zur Erkennung einer oder mehrerer Fehlstellen einer Beschichtung im Rahmen einer Batteriezellenherstellung.

Hierbei weist die Produktion der Batteriezellen einen Trocknungsschritt beziehungsweise ein Trocknungsverfahren für die Beschichtung auf, da diese typischerweise im Rahmen der Batteriezellenherstellung nass mittels einer Paste (Elektrodenpaste) auf einer metallischen Trägerfolie aufgebracht wird. Im vorliegenden bevorzugten Ausführungsbeispiel erfolgt die Trocknung strahlenbasiert, insbesondere mittels Infrarotstrahlern oder Lasern.

Die Trocknung beziehungsweise wenigstens teilweise Trocknung der Beschichtung erfolgt innerhalb eines Trocknungsbereiches der Batteriezellenherstellung. Innerhalb des genannten Trocknungsbereiches ist im vorliegenden Ausführungsbeispiel eine Wärmebildkamera zur Thermographie der Beschichtung, das heißt zur thermographischen Erfassung der Beschichtung angeordnet.

Die Thermographie erfolgt vorliegend zeitlich und räumlich aufgelöst.

In einem ersten Schritt S1 des Verfahrens erfolgt eine zeitlich und ortsaufgelöste Thermographie der Beschichtung während der Trocknung. Die Thermographie wird mittels der im Trocknungsbereich angeordneten Wärmebildkamera durchgeführt und beispielsweise ergänzend durch eine Recheneinheit ausgewertet.

In einem zweiten Schritt S2 des Verfahrens erfolgt in Abhängigkeit von erfassten räumlichen thermographischen Inhomogenitäten die Erkennung der Fehlstellen. Hierzu kann die Recheneinheit die thermographischen Daten/Abbilder auswerten beziehungsweise analysieren. Nach dem zweiten Schritt S2 sind somit die fehlerbehafteten räumlichen Bereiche der Beschichtung beziehungsweise die örtlichen Fehlstellen der Beschichtung bekannt.

In einem dritten Schritt S3 des Verfahrens werden in einem dem Trocknungsverfahren nachgelagerten Schneideverfahren zur Stückelung der Beschichtung die erkannten Fehlstellen ausgeschlossen. Mit anderen Worten werden die fehlerbehafteten Bereiche aus der Beschichtung geschnitten und nicht weiter für die Batteriezellenherstellung verwendet. Dadurch wird vorteilhafterweise die Batteriezellenherstellung verbessert, da die produzierten Batteriezellen weniger Fehler aufweisen.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- S1: erster Schritt
- S2: zweiter Schritt
- S3: dritter Schritt

## Patentansprüche

1. Verfahren zur Erkennung einer oder mehrerer Fehlstellen einer Beschichtung, wobei die Beschichtung zur Herstellung einer oder mehrerer Batteriezellen vorgesehen ist, **gekennzeichnet dadurch, dass** eine ortsaufgelöste Thermographie der Beschichtung bei einem und/oder nach einem zur Trocknung der Beschichtung vorgesehenen Trocknungsverfahren durchgeführt wird, wobei in Abhängigkeit von erfassten räumlichen thermographischen Inhomogenitäten die Erkennung der Fehlstellen erfolgt.

2. Verfahren gemäß Anspruch 1, **gekennzeichnet dadurch, dass** die Fehlstellen durch einen zeitlichen Verlauf ihrer Erwärmung mittels der ortsaufgelösten Thermographie erkannt werden.

3. Verfahren gemäß Anspruch 2, **gekennzeichnet dadurch, dass** der zeitliche Verlauf einen charakteristischen Umschlagpunkt, ab welchem eine schnellere Erwärmung erfolgt, aufweist, wobei mittels eines früheren oder späteren Auftreten des Umschlagspunktes die Erkennung der Fehlstellen erfolgt.

4. Verfahren gemäß einem der vorhergehenden Ansprüche, **gekennzeichnet dadurch, dass** die Thermographie lediglich bei der Trocknung oder unmittelbar nach der Trocknung der Beschichtung erfolgt.

5. Verfahren gemäß einem der vorhergehenden Ansprüche, **gekennzeichnet dadurch, dass** als Trocknungsverfahren eine Infrarottrocknung und/oder eine Lasertrocknung verwendet werden/ wird.

6. Verfahren gemäß einem der vorhergehenden Ansprüche, **gekennzeichnet dadurch, dass** eine Kategorisierung der Fehlstellen in Abhängigkeit ihres thermographischen Abbildes erfolgt.

7. Verfahren zur Herstellung einer oder mehrerer Batteriezellen, wobei wenigstens eine Beschichtung zur Herstellung der Batteriezellen verwendet wird, **gekennzeichnet dadurch, dass** eine ortsaufgelöste Thermographie der Beschichtung bei einem und/oder nach einem zur Trocknung der Beschichtung vorgesehenen Trocknungsverfahren durchgeführt wird, wobei in Abhängigkeit von erfassten räumlichen thermographischen Inhomogenitäten die Erkennung der Fehlstellen erfolgt.

8. Verfahren gemäß Anspruch 7, **gekennzeichnet dadurch, dass** die Thermographie lediglich bei der Trocknung oder unmittelbar nach der Trocknung der Beschichtung erfolgt.

9. Verfahren gemäß Anspruch 8, **gekennzeichnet dadurch, dass** ein dem Trocknungsverfahren nachgelagertes Schneideverfahren zur Stückelung der Beschichtung eine oder mehrere erkannte Fehlstellen ausschließt.

10. Verfahren gemäß einem der Ansprüche 7 bis 9, **gekennzeichnet dadurch, dass** die Beschichtung durch ein Aufbringen einer Elektrodenpaste auf einer metallischen Trägerfolie ausgebildet wird.

11. Vorrichtung zur Erkennung einer oder mehrerer Fehlstellen einer Beschichtung, die zur Herstellung einer oder mehrerer Batteriezellen vorgesehen ist, wobei die Vorrichtung einen Trocknungsbereich zur Trocknung der Beschichtung umfasst, **dadurch gekennzeichnet, dass** innerhalb des Trocknungsbereichs eine Wärmebildkamera angeordnet ist, wobei die Wärmebildkamera dazu ausgebildet ist, eine ortsaufgelöste Thermographie der Beschichtung durchzuführen, wobei in Abhängigkeit von erfassten räumlichen thermographischen Inhomogenitäten die Erkennung der Fehlstellen erfolgt.
